# EUROPEAN PATENT APPLICATION

(11) **EP 3 171 142 A1**
(43) Date of publication of application: **24.05.2017**
(21) Application number: 16199613.7
(22) Date of filing: 18.11.2016
(51) Int. Cl.: G01H 1/00

(54) **SYSTEMS AND METHODS FOR MONITORING GEARBOX HEALTH BY VIBRATION**

(30) Priority: 23.11.2015 US 201514949448
(71) Applicant: United Technologies Corporation, Farmington, CT 06032 (US)
(72) Inventor: McCUNE, Michael E., Colchester, CT Connecticut 06415 (US); SCHWARZ, Frederick M., Glastonbury, CT Connecticut 06033 (US)
(74) Representative: Leckey, David Herbert

(57) **Abstract**

A method of monitoring engine health is provided. The method may include the step of monitoring a vibration of a gearbox (106) using a vibration sensor to detect a primary amplitude at a primary mesh frequency and a sideband amplitude at a sideband frequency. The method may further include calculating a ratio of the primary amplitude to the sideband amplitude, and evaluating a health of the gearbox (106) based on the ratio of the primary amplitude to the sideband amplitude.

## Description

### FIELD

The present disclosure relates to gas turbine engines, and, more specifically, to a system for monitoring gearbox vibration in geared-turbofan engines.

### BACKGROUND

Geared-turbofan gas-turbine engines may operate with a gearbox rotatably coupled between a fan section and a compressor section. The gearbox may adjust the angular velocity of the coupled sections in a proportional manner. As the gearbox ages it may be subject to maintenance and/or replacement. However, detecting the health of the gearbox condition and performing timely maintenance may be difficult, as the gearbox and its internal components are not easily accessible in many configurations.

The sensors used to monitor gearbox health may be subject to failure over the life of a gearbox. As such, the parts may be replaced over time. However, the difficult to reach location of the gearbox and its components may hinder replacement of sensors.

### SUMMARY

A method of monitoring engine health may include the step of monitoring a vibration of a gearbox using a vibration sensor to detect a primary amplitude at a primary mesh frequency and a sideband amplitude at a sideband frequency. The method may further include calculating a ratio of the primary amplitude to the sideband amplitude, and evaluating a health of the gearbox based on the ratio of the primary amplitude to the sideband amplitude.

In various embodiments, the method may include storing at least one of the ratio, the primary amplitude, or the sideband amplitude to maintain a vibration history. The vibration sensor may be disposed on an outer diameter of a front center body, on a fan bearing support, and/or on an aft surface of a front center body. The primary mesh frequency may be calculated by multiplying a number of gear teeth by an angular frequency of a fan rotor. The method may further include signaling a maintenance event in response to the ratio being below a predetermined threshold, and/or selecting the sideband frequency from a plurality of sideband frequencies proximate the primary mesh frequency.

A method of monitoring engine health may also include monitoring a vibration of a gearbox using a vibration sensor to detect a primary amplitude at a primary mesh frequency and a sideband amplitude at a sideband frequency. The vibration sensor may be mounted on an outer diameter of a front center body, a fan bearing support, and/or an aft surface of the front center body. Health of the gearbox may then be evaluated based on at least one of the primary amplitude or the sideband amplitude.

In various embodiments, the method may include calculating a ratio of the primary amplitude to the sideband amplitude. A maintenance event may be signaled in response to the ratio being below a predetermined threshold. The primary amplitude, the sideband amplitude, and/or a ratio of the primary amplitude to the sideband amplitude may also be stored. The primary mesh frequency may be calculated by multiplying a number of gear teeth by an angular frequency of a fan rotor. The method may also comprise selecting the sideband frequency from a plurality of sideband frequencies proximate the primary mesh frequency.

A gas turbine engine may include a fan section configured to rotate about an axis. A gearbox may be rotatably coupled to the fan section by a fan rotor. A bearing support may be coupled to the fan rotor by a bearing with the bearing support fixed about the axis. The bearing support may also be configured to vibrate in response to a rotation in the gearbox. A front center body may be mechanically coupled to the bearing support with the front center body also fixed about the axis. The front center body may be configured to vibrate in response to the rotation in the gearbox. A vibration sensor may be mounted to the bearing support and/or the front center body.

In various embodiments, the vibration sensor may be mounted to an outer diameter of the front center body, an aft surface of the front center body, and/or a radially-outward-facing surface of the bearing support. A vibration path extends from the gearbox, through the fan rotor, through the bearing, and into the bearing support and/or the front center body.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates cross-sectional view of an aircraft gas turbine engine having an epicyclic gear system, according to various embodiments;
FIG. 2 illustrates a cross-sectional view of a geared engine having mounting points for vibration monitoring systems, in accordance with various embodiments;
FIG. 3 illustrates a graph of vibration amplitude of a gearing system at a primary mesh frequency and at sideband frequencies, in accordance with various embodiments; and
FIG. 4 illustrates a process for monitoring the health of a gearbox in a gas-turbine engine, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

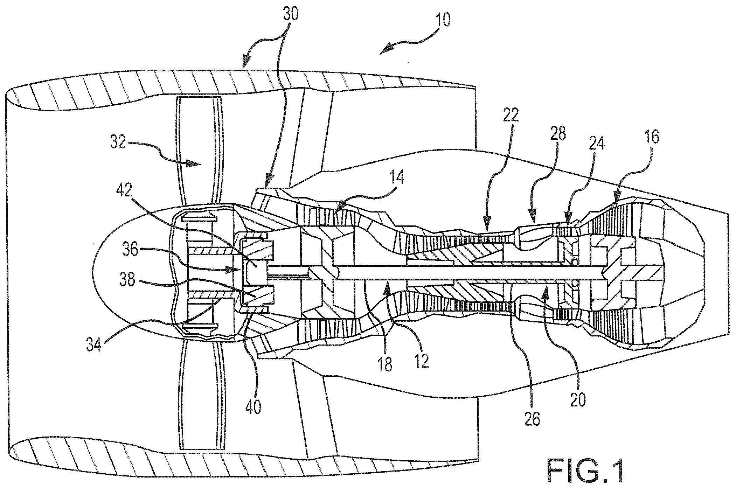

FIG. 1 shows a schematic cross-sectional view of an exemplary gas turbine engine 10 in which a system according to various embodiments may be used. Gas turbine engine 10 may include a low pressure unit 12 that includes low pressure compressor 14 and low pressure turbine 16 connected by low pressure shaft 18, high pressure unit 20 that includes high pressure compressor 22 and high pressure turbine 24 connected by high pressure shaft 26, combustor 28, nacelle 30, fan 32, fan shaft 34, and epicyclic gear system 36. The epicyclic gear system may be a fan drive gear system (FDGS). A fan drive gear system (FDGS) follows the fan shaft but separates or decouples the fan 32 from the low pressure unit 12. The fan 32 rotates at a slower angular velocity than the low pressure unit 12. This allows each of the fan 32 and the low pressure unit 12 to operate with improved efficiency. While gas turbine engine 10 has been described, it is to be understood that the methods and systems according to various embodiments as herein described may be used in gas turbine engines having other configurations.

As shown in the exemplary gas turbine engine of FIG. 1, low pressure unit 12 is coupled to fan shaft 34 via the epicyclic gear system 36. Epicyclic gear system 36 generally includes an epicyclic gear train including a star gear 38, a ring gear 40, and sun gear 42. As hereinafter described, the epicyclic gear train may be configured as a star gear system or a planetary gear system. Epicyclic gear trains reduce or increase the rotational speed between two rotating shafts or rotors. In response to rotation of low pressure unit 12, epicyclic gear system 36 causes the fan shaft 34 to rotate at a slower rotational velocity than that of low pressure unit 12, but in the opposite direction.

Still referring to FIG. 1, the sun gear 42 is attached to and rotates with low pressure shaft 18. Sun gear 42 is rotatably mounted on low pressure shaft 18. Ring gear 40 is connected to fan shaft 34 which turns at the same speed as fan 32. Star gear 38 is enmeshed between sun gear 42 and ring gear 40 such that star gear 38 rotates in response to rotation of sun gear 42. Star gear 38 is rotatably mounted on a gear carrier 48, which is stationary, by a stationary journal pin with the star gear 38 circumscribing the journal pin. The journal pin is disposed inside of the at least one rotatable star gear and connected to the gear carrier 48. The journal pins 120 inside each of the star gears may be supported by the gear carrier 48. The gear carrier 48 interconnects the journal pins with each other and, by doing so, also interconnects the star gears 38 to each other. The outer radial surface (i.e., interface surface 52) of the journal pin interfaces with the inner surface of the star gear 38. Thus, the interface surface of journal pin and the inner surface of the star gear 38 are interfacing bearing surfaces. A thin, film of lubricant flows between each star gear 38 and its journal pin 120 to support the star gear.

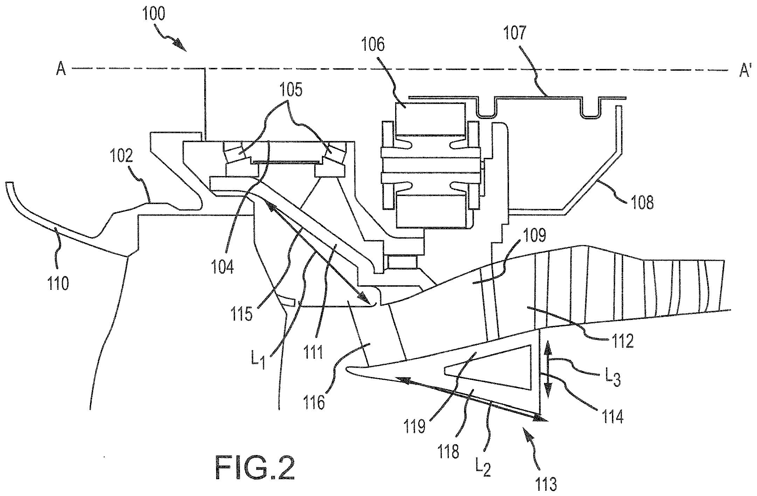

With reference to FIG. 2, a cross-sectional view of a fan-drive gear system assembly 100 is shown, in accordance with various embodiments. Fan drive gear system includes a fan 102 coupled to a fan rotor 104. Fan rotor 104 may rotate on bearings 105 so that fan 102 may rotate about axis A-A' in a radial area between nose cone 110 and fan bearing support 111, which is a non-rotating component of a geared-turbofan engine. Fan bearing support 111 may be an annular support structure having a conical geometry and configured to support bearings 105 and facilitate relative rotation between fan bearing support 111 (which does not rotate) and fan rotor 104 (which rotates about axis A-A').

In various embodiments, fan rotor 104 may be coupled to an outer ring gear of gearbox 106. Gearbox 106 may be an epicyclic gearbox as disclosed above with reference to FIG. 1. Inner ring may be coupled to shaft 107, which is further mechanically coupled to a low-pressure turbine. Non-rotating support structure 108 may be disposed aft of gearbox 106, radially outward from shaft 107, and coupled to non-rotating (about axis A-A') gears of gearbox 106. Non-rotating support structure 108 may be coupled to and supported by axially elongated strut 109 and vane 112. Axially elongated strut 109 may further be coupled to front center body 113. Front center body 113 is a non-rotating support structure of the geared-turbofan engine disposed radially outward from gearbox 106 and non-rotating support structure 108.

In various embodiments, front center body 113 may have an annular shape with an outer diameter 118 extending at least partially in an axial direction. An aft wall 114 of front center body 113 may extend at least partially in a radial direction. Inner diameter 119 of front center body 113 may be coupled to axially elongated strut 109. Outer diameter 118 and aft wall 114 of front center body 113 may be coupled to and/or formed integrally with inner diameter 119 of front center body 113. The front center body 113 may have a triangular cross-sectional geometry that forms an annulus about axis A-A'.

In various embodiments, inner diameter 119 of front center body 113 may be coupled to fan bearing support 111 to provide support for bearings 105. A vibration path may thereby be formed from gearbox 106, through fan rotor 104, through bearings 105, and into fan bearing support 111. In that regard, fan bearing support 111 may vibrate at the same or similar frequencies as gearbox 106. Surface 115 may be a radially-outward-facing surface of fan bearing support 111 and is thus an accessible location to measure vibration of gearbox 106. In that regard, a vibration sensor may be mounted at any point along length L₁ surface 115 of fan bearing support 111. From surface 115 of fan bearing support 111, a vibration sensor may accurately measure the vibrations of gearbox 106 including amplitudes at primary mesh frequencies and sideband frequencies for analysis, as disclosed in detail below. The vibration sensor may thus be replaced as a line replaceable unit (LRU) or a semi-LRU (i.e., an LRU accessible with minimal part removal).

In various embodiments, a vibration path may be formed through non-rotating support structure 108 and fan bearing support 111, into axially elongated strut 109, and into front center body 113. The inner diameter 119 of front center body may be in the gas path and be generally inaccessible without removing major components of the engine. The outer diameter 118 of front center body 113 and the aft wall 114 of front center body 113 may provide an accessible location to monitor the vibration of gearbox 106. In that regard, a vibration sensor may be mounted at any point along length L₂ of outer diameter 118 and/or length L₃ of aft wall 114 of front center body 113. From outer diameter 118 and/or aft wall 114 of front center body 113, a vibration sensor may accurately measure the vibrations of gearbox 106 including amplitudes at primary mesh frequencies and sideband frequencies for analysis. The vibration sensor may thus be replaced as an LRU or semi-LRU.

In various embodiments, the vibration sensor may be a pickup configured to detect vibrations in over a range of frequencies. For example, a vibration sensor may include a high frequency accelerometer. The high frequency accelerometer may be fastened, for example by bolting or riveting, onto fan bearing support 111 and/or front center body 113. The vibration sensor may be capable of measuring amplitudes at frequencies of 5 kHz or greater.

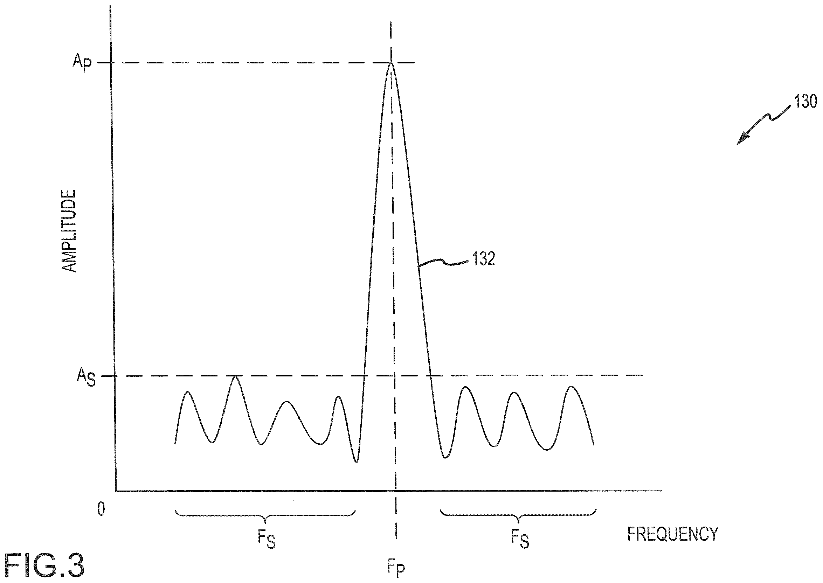

With reference to FIG. 3, a graph 130 is shown with amplitude along the y axis and frequency along the x axis, in accordance with various embodiments. Plot 132 of graph 130 may thus depict a graphical representation of the amplitude of vibration at various frequencies. A primary mesh frequency is identified at frequency F_{P}. The primary mesh frequency is equal to the number of teeth in a gear multiplied by the angular frequency of fan rotor 104. Thus, as the angular velocity of fan rotor 104 increases, the primary mesh frequency may increase as well. The primary mesh frequency may therefore be dynamically evaluated and measured, as the mesh frequency shifts with engine rotational frequency.

In various embodiments, sideband frequencies may occur at frequencies adjacent to the primary mesh frequency. For example, if the primary mesh frequency F_{P} is located at 5 kHz, sideband frequencies F_{S} may include vibrations ranging from 3-4.5 kHz and from 5.5 to 7 kHz. These sideband frequencies are provided for clarity, it will be understood that in the sideband frequency will vary based on the specific example being measured. The sideband amplitude may be measured at one or more frequency. For example, the amplitude may be measured at a range of frequencies near the primary mesh frequency and the maximum amplitude in the range may be selected as the sideband amplitude for further analysis. Minimum amplitude may also be measured over the sideband ranges and selected as the sideband amplitude. An average frequency may be calculated over the sideband ranges and selected as the sideband amplitude. Thus, sideband amplitude may be identified in any number of ways that are illustrative of the amplitude of vibrations over the sideband frequency. As illustrated in FIG. 3, sideband amplitude As is identified as the maximum amplitude over the sideband frequencies.

A healthy gearbox may be a gearbox operating normally without an immediate service concern. An unhealthy gearbox may be one with worn gears presenting a service concern. During operation of a healthy gearbox, the amplitude of vibration at the primary mesh frequency is typically larger than the amplitude of vibration at the sideband frequencies. Thus, a comparison of the primary amplitude to the sideband amplitude may be demonstrative of gearbox health. A ratio of primary frequency to sideband frequency may be used to evaluate engine health by comparing a predetermined ratio to a measured ratio. An expected healthy ratio, for example, may comprise a range of ratios or a threshold value over which the vibration comparison indicates the gearbox may be ready for service. Similarly, the ratio may be compared to an expected unhealthy ratio comprising a range of ratios or a threshold value to accomplish the same gearbox evaluation. Using an amplitude ratio may normalize the primary amplitude and sideband amplitude to limit variations caused by production variance introduced during gearbox production.

For example, a ratio of primary amplitude over sideband amplitude (A_{P}/A_{S}) of 5.0 measured during takeoff and climb may signify a nearly new gearbox. A ratio less than a threshold value of 2.0 measured during takeoff and climb may indicate that maintenance is due in the near future. Therefore, the primary amplitude and sideband amplitude may be measured during takeoff and climb to calculate the ratio. The data measured and/or recorded may include corrections to the data based on N1 speeds (i.e., low pressure compressor speeds) and snap shots of data during climb and/or cruise. For example, the primary mesh frequency may change with variations in N1 speed. Measurements of vibration at other engine speeds may also be taken and monitored.

In various embodiments, vibration monitoring may thereby be used to identify historical trending to set maintenance flags (e.g., by saving the amplitude data and ratios for each flight and comparing flights over time). Engine power level advisories may also be made to the cockpit in response to amplitude measurements and ratios, including manual or automatic in-flight shut downs (IFSD) depending on the severity of the vibration and the rate of change of the ratio of sideband amplitude to primary mesh vibration.

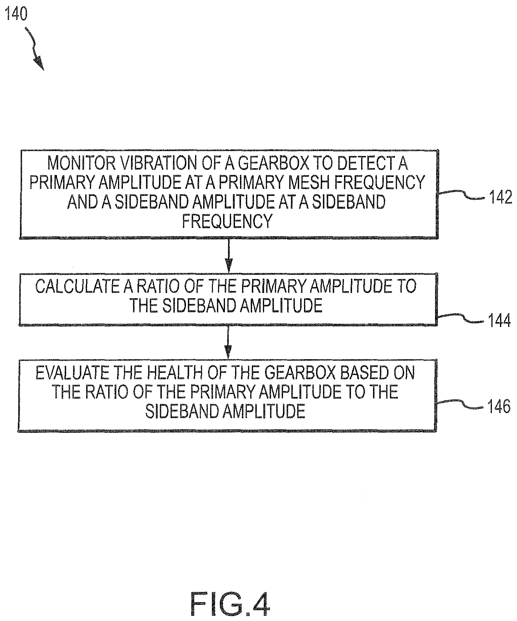

With reference to FIG. 4, an exemplary process 140 for monitoring gearbox health using vibrations is shown, in accordance with various embodiments. Process 140 may be executed by a controller in electronic communication with one or more vibration sensors (e.g., high frequency accelerometers). For example, the controller may comprise a full authority digital engine control (FADEC) or an Electronic Centralized Aircraft Monitor (ECAM). The FADEC, for example, may comprise an electronic control box (ECB). A FADEC may include one or more processors and one or more tangible, non-transitory memories and be capable of implementing logic. The processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof.

In various embodiments, the processor may thus be configured to implement various logical operations in response to execution of instructions, for example, instructions stored on a non-transitory, tangible, computer-readable medium. As used herein, the term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

In various embodiments, the controller may monitor the vibration of a gearbox to detect a primary amplitude at a primary mesh frequency and a sideband amplitude at a sideband frequency (Block 142), as disclosed in greater detail above. The controller may then calculate a ratio of the primary amplitude to the sideband amplitude (Block 144). The ratio may be calculated as disclosed with reference to FIG. 3 above. The controller may then evaluate the health of the gearbox based on the ratio of the primary amplitude to the sideband amplitude (Block 146).

In various embodiments, the controller may store the ratio, the primary amplitude, and/or the sideband amplitude to maintain a vibration history. The vibration history may be used to identify trends such as the rate of change of the amplitude ratio over time. The controller may calculate and/or identify the primary mesh frequency by multiplying a number of gear teeth by an angular frequency of a fan rotor. The primary frequency may thereby be adjusted to account for variation in engine rotational frequency. The controller may signal a maintenance event in response to the ratio being below a predetermined threshold, for example, to support improved engine uptime.

In various embodiments, the vibration sensor may be advantageously located for ease of access and replacement. A vibration sensor may be disposed on outer diameter 118 of a front center body 113, on fan bearing support 111, and/or on an aft wall 114 of front center body 113. The health monitoring system of the present disclosure may thus provide beneficial locations for mounting vibration sensors based on the measurable amplitude of vibrations at the locations as well as ease of access for sensor installation and/or replacement.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A method of monitoring engine health, comprising:
receiving, by a processor, vibration information from a vibration sensor, the vibration information comprising a primary amplitude at a primary mesh frequency and a sideband amplitude at a sideband frequency;
calculating, by the processor, a ratio of the primary amplitude to the sideband amplitude; and
evaluating, by the processor, a health of the gearbox (106) based on the ratio of the primary amplitude to the sideband amplitude.

2. The method of claim 1, further comprising storing, by the processor, at least one of the ratio, the primary amplitude, or the sideband amplitude to maintain a vibration history.

3. The method of claim 1 or 2, wherein the vibration sensor is disposed on an outer diameter (118) of a front center body (113), is disposed on a fan bearing support or is located on an aft surface (114) of a front center body (113).

4. The method of claim 1, 2 or 3, further comprising signaling, by the processor, a maintenance event in response to the ratio being below a predetermined threshold.

5. A method of monitoring engine health, comprising:
receiving, by a processor, vibration information from a vibration sensor, the vibration information comprising a primary amplitude at a primary mesh frequency and a sideband amplitude at a sideband frequency;
wherein the vibration sensor is mounted on at least one of an outer diameter (118) of a front center body (113), a fan bearing support (111), or an aft surface (114) of the front center body (113); and
evaluating, by the processor, a health of the gearbox (106) based on at least one of the primary amplitude or the sideband amplitude.

6. The method of claim 5, further comprising calculating, by the processor, a ratio of the primary amplitude to the sideband amplitude, and, optionally, further comprising signaling, by the processor, a maintenance event in response to the ratio being below a predetermined threshold.

7. The method of claim 5 or 6, further comprising storing, by the processor, at least one of the primary amplitude, the sideband amplitude, or a ratio of the primary amplitude to the sideband amplitude.

8. The method of any preceding claim, further comprising calculating, by the processor, the primary mesh frequency by multiplying a number of gear teeth by an angular frequency of a fan rotor.

9. The method of any preceding claim, further comprising selecting, by the processor, the sideband frequency from a plurality of sideband frequencies proximate the primary mesh frequency.

10. A gas turbine engine (10), comprising:
a front center body (113) mechanically coupled to a bearing support (111) coupled to a fan rotor (104) by a bearing (105), wherein the front center body (113) is fixed about an axis (A-A1), wherein the front center body (113) is configured to vibrate in response to the rotation in the gearbox (106); and
a vibration sensor mounted to at least one of the bearing support (111) or the front center body (113).

11. The gas turbine engine of claim 10, wherein the vibration sensor is mounted to an outer diameter (118) of the front center body (113).

12. The gas turbine engine of claim 10, wherein the vibration sensor is mounted to an aft surface (114) of the front center body (113).

13. The gas turbine engine of claim 10, 11 or 12, wherein the vibration sensor comprises a line replaceable unit (LRU) mounted to a radially-outward-facing surface of the bearing support (111).

14. The gas turbine engine of any of claims 10 to 13, wherein a vibration path extends from the gearbox (106), through the fan rotor (104), through the bearing (105), and into the bearing support (111).

15. The gas turbine engine of any of claims 10 to 13, wherein a vibration path extends from the gearbox (106), through the fan rotor (104), through the bearing (105), through the bearing support (111), and into the front center body (113).
